# EUROPEAN PATENT SPECIFICATION

(11) **EP 3 187 958 B1**
(45) Date of publication and mention of the grant of the patent: **19.09.2018**
(21) Application number: 15003677.0
(22) Date of filing: 28.12.2015
(51) Int. Cl.: G05D 7/01, E03C 1/084

(54) **A FLOW REGULATOR**
DURCHFLUSSREGLER
RÉGULATEUR DE DÉBIT

(43) Date of publication of application: 05.07.2017
(73) Proprietor: Xiamen Solex High-Tech Industries Co., Ltd., Xiamen Area of China (Fujian) Pilot Free Trade Zone (CN)
(72) Inventor: Huang, Feilong, Fujian 361000 (CN); Zhao, Guosong, Fujian 361000 (CN); Chen, Wenxing, Fujian 361000 (CN)
(74) Representative: Verscht, Thomas Kurt Albert

(56) References cited:
- WO-A1-2005/118968
- CN-B- 102 926 437
- DE-A1- 10 027 986
- DE-U1- 8 133 875

## Description

### Field of the invention

The present invention relates to a flow regulator.

### Background of the invention

An integrated flow regulator is published in Chinese patent database with announce number CN102926437B, it comprises a main body, a mutation chamber, a fixed ring and a diversion device. Water from the outsider flows firstly through the filter, then through the diversion holes, and through the diversion passages finally to the mutation chamber, which sucks air in due to the negative pressure according to Venturi effect, water and air mix and flow out of the outlet; the elastic water stop piece directly faces to the water from the filtering portion, under the action of the water pressure, it expands at the diversion holes to change the effective section area of the diversion holes. In this application, firstly, water flows out of the diversion holes and directly vertically impacts the bottom plate, then flows out of the diversion passages, as water from the diversion holes directly vertically impacts the bottom plate, it greatly decreases the water pressure, resulting in reducing of outlet volume, and it also produces noise; secondly, the elastic water stop element is sleeved on the protrusion, when water pressure acts on the elastic water stop element, as the inner side of the elastic water stop element is limited that the elastic water stop element is pressed and deformed outwardly in the radial direction, resulting in bad water saving effect and bad volume stability. At the same way, CN202139650U, CN1761791A, CN104047336A has the same problem as CN102926437B.

### Summary of the invention

The present invention is provided with a flow regulator, which overcomes the disadvantages of the existing known technology. The technical proposal of the present invention is that:
A flow regulator, comprising a housing portion (100) and a diversion device (200) disposed in the housing portion (100), the diversion device (200) is used to divide the water flowing, the divided water flowing and the air sucked in are mixed to generate bubble water, wherein an annular seat (300) and an elastic water stop ring (400) are further provided, the annular seat (300), the diversion device (200) and the housing portion (100) are fixedly connected together; the diversion device (200) comprises a periphery wall (210), a central base (220) in the periphery wall (210) and a deflecting annular wall (230) fixedly connecting the periphery wall (210) and the central base (220), the periphery wall (210) is disposed with diversion holes (211), the external periphery surface of the deflecting annular wall (230) is gradually larger downwardly radially from the central base (220) to the periphery wall (210), the central base (220) has at least a part extending out of the internal hole of the annular seat (300), a flowing clearance is formed between the central base (220) and the hole wall of the internal hole of the annular seat, the flowing clearance is disposed above the deflecting annular wall (230) to make water directly flow to the deflecting annular wall (230) through the flowing clearance;
the water stop ring (400) is supported on the annular seat (300) to surround and fit to the central base (220), so that the flowing area of the flowing clearance is adjustable by the water pressure so as to save water.

In another preferred embodiment, the annular seat (300) is fixedly connected to the periphery wall (210); a protruding wall (310) is protruded on the annular seat (300) to surround the internal hole of the annular seat (300), the external side of the water stop ring is contacted with the internal side of the protruding wall (310).

In another preferred embodiment, a filter (500) is further provided, the filter (500) is assembled to the protruding wall (310).

In another preferred embodiment, the upper periphery of the periphery wall (210) protrudes outwardly with a support plate (212), the external periphery of the support plate (212) protrudes upwardly to form a connecting wall (213), the annular seat (300) is supported on the support plate (212), the annular seat (300) is fixedly connected the diversion device (200) by the cooperation of the connecting wall (213) and the annular seat (300).

In another preferred embodiment, the central base (220) is arranged annularly with a plurality of protrusions (221) with spaces therebetween corresponding to the water stop ring.

In another preferred embodiment, the housing portion (100) is disposed with a mutation chamber (110) and a suction passage (120) connecting the inner and the outer of the mutation chamber (110), the diversion device (200) is located to the mutation chamber (110), the divided water enters the mutation chamber (110) and negative pressure generates.

In another preferred embodiment, the housing portion (100) comprises a housing (130) and a fixed ring (140), the housing (130) comprises an external wall (131), the external wall (131) is disposed with a suction passage (120) running through the inner and the outer, the fixed ring (140) is fixedly connected to the upper portion of the external wall (131), the diversion device (200) is fixedly connected to the fixed ring (140).

In another preferred embodiment, the fixed ring (140) is disposed with a conical surface (141) corresponding to the diversion holes (211), the conical surface (141) surrounds the diversion device (200), so that water flows out of the diversion holes (211) and impacts the conical surface.

In another preferred embodiment, the external revolution surface of the deflecting annular wall (230) comprises a part of the conical surface.

In another preferred embodiment, the external revolution surface of the deflecting annular wall (230) comprises a smooth curve.

In another preferred embodiment, the external revolution surface of the deflecting annular wall (230) comprises an arc with the center of circle outward.

Compared to the existing known technology, the technical proposal of the present invention has advantages as follows:
1. the deflecting annular wall is configured, the flowing clearance is disposed above the deflecting annular wall so that water flows out of the flowing clearance and then directly impacts the deflecting annular wall, it can reduce the pressure loss when water flows from the flowing clearance to the diversion holes, even in low pressure, it can achieve high volume and reduce impacting noise. The water stop ring is supported on the annular seat and surrounding and fitting to the central base, when water pressure acts on the elastic water stop element, the elastic water stop element deforms inwardly radially, it has well water saving effect and high stable flow volume.
2. the diversion device and the annular seat can be two separated components, the structure has advantages that when to develop products with different volume, it can just develop different diversion devices, and it can adjust the arrangement and size of the diversion holes as the different volume classes needed, so that it can achieve better outlet effect of the water type of the outlet devices.

### Brief description of the drawings

The present invention will be further described with the drawings and the embodiments.
FIG.1 illustrates a schematic diagram of an aerator of a preferred embodiment.
FIG.2 illustrates a second schematic diagram of the aerator of the preferred embodiment.

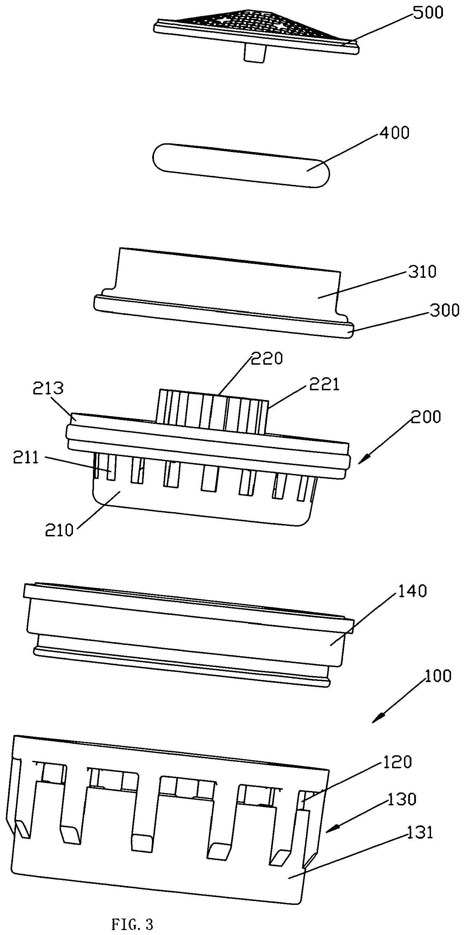

FIG.3 illustrates an exploded and schematic diagram of the aerator of the preferred embodiment.

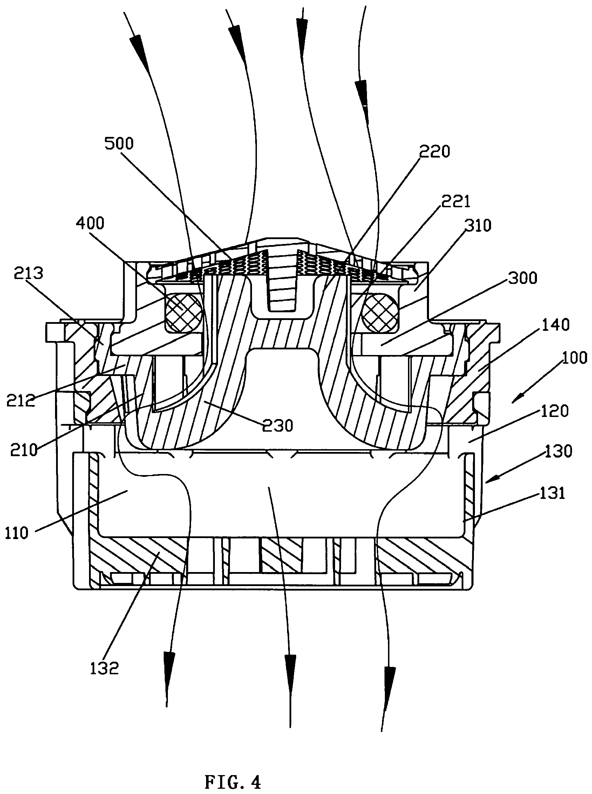

FIG.4 illustrates a sectional diagram of the aerator of the preferred embodiment in low pressure state.

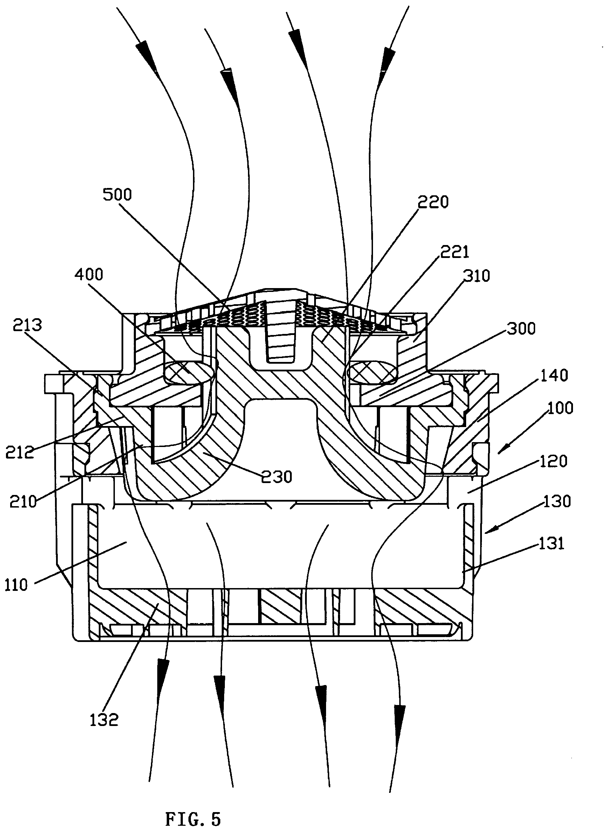

FIG.5 illustrates a sectional diagram of the aerator of the preferred embodiment in high pressure state.

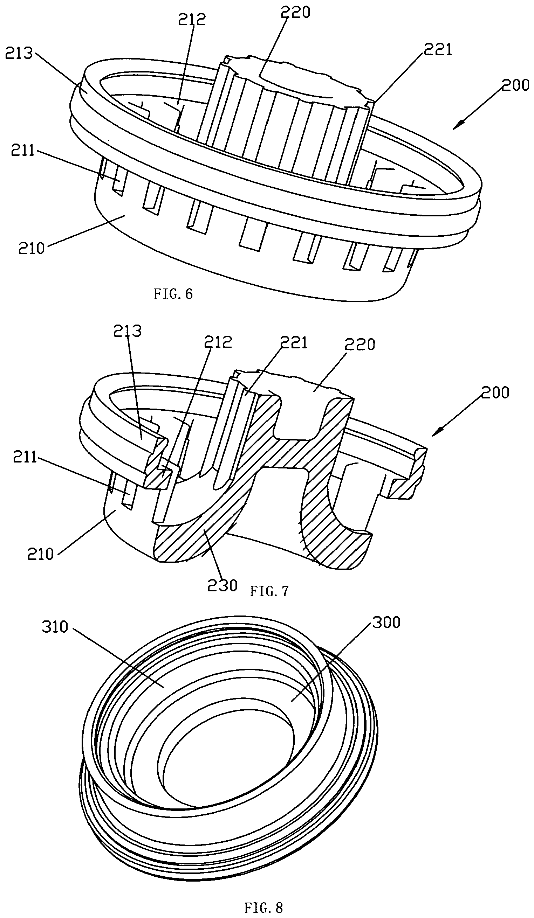

FIG.6 illustrates a schematic diagram of a diversion device of the aerator.
FIG.7 illustrates a sectional schematic diagram of the diversion device of the aerator.
FIG.8 illustrates a schematic diagram of an annular seat of the aerator.

### Detailed description of the embodiments

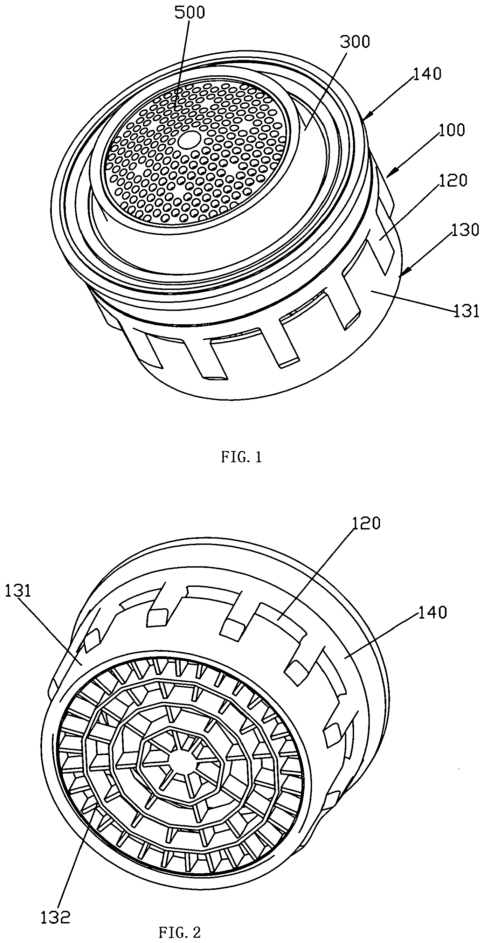

Referring to FIGs 1∼8, the flow regulator comprises a housing portion 100, a diversion device 200 assembled in the housing portion 100, an annular seat 300, an elastic water stop ring 400 and a filter 500.

The housing portion 100 comprises a housing 130 and a fixing ring 140, the housing 130 comprises an outer wall 131 and an inserting element 132 fixedly connected at the bottom portion of the outer wall 131, the inserting element 132 is a grid outlet mesh, the outer wall 131 is disposed with a plurality of suction passages 120 annularly arranged running through the inside and outside of the outer wall 131, the fixing ring 140 is fixedly connected to the upper portion of the outer wall 131, the housing portion 100 is disposed with a mutation chamber 110.

The diversion device 200 comprises a periphery wall 210, a central base 220 in the periphery wall 210 and a deflecting annular wall 230 fixedly connecting the periphery wall 210 and the central base 220, the upper periphery of the periphery wall 210 protrudes outwardly with a support plate 212, the external periphery of the support plate 212 protrudes upwardly with a connecting wall 213, the periphery wall 210 is disposed with diversion holes 211, the diversion holes 211 divides the water flowing. The connecting wall 213 is fixedly connected to the fixing ring 140 so as to fixedly assemble the annular seat 300, the diversion device 200 and the housing portion 100 together.

Water flows out of the diversion device 200 to be divided and then enters the mutation chamber 110, when the diversion flowing enters the mutation chamber, the flowing area changes large, so that negative pressure generates, air is sucked through the suction passage 120 to mix with the water flowing to generate bubble water. Preferred, the fixed ring 140 is disposed with a conical surface 141 corresponding to the diversion holes 211, the conical surface 141 surrounds the diversion device 200, so that water flows out of the diversion holes 211 and impacts the conical surface then flows downstream, the mutation chamber 110 comprises the clearance of the conical surface and the periphery wall and the portion of the housing portion below the diversion device. As needed, the periphery wall can be configured with a surrounding wall and an annular bottom wall extending inwardly radially from the bottom edge of the surrounding wall, the diversion holes can be disposed at the surrounding wall or the annular bottom wall, in this embodiment, there is no annular bottom wall in the drawings, the diversion holes are disposed at the surrounding wall, as needed, they can also be disposed at the annular bottom wall.

The external periphery surface of the deflecting annular wall 230 is gradually larger downwardly radially from the central base 220 to the periphery wall 210, the central base 220 has at least a part extending out of the internal hole of the annular seat 300, a flowing clearance is formed between the central base 220 and the hole wall of the internal hole of the annular seat, the flowing clearance is disposed above the deflecting annular wall 230 to make water directly flow to the deflecting annular wall 230 through the flowing clearance. The external revolution surface of the deflecting annular wall 230 comprises a part of the conical surface. In other case, the external revolution surface of the deflecting annular wall 230 comprises a smooth curve or an arc with the center of circle outward.

The annular seat 300 is fixedly assembled to the periphery wall 210, the structure of the assembly is that: the annular seat 300 is supported on the support plate 212, the annular seat 300 is fixedly connected the diversion device 200 by the cooperation of the connecting wall 213 and the annular seat 300. A protruding wall 310 is protruded on the annular seat 300 to surround the internal hole of the annular seat 300, the water stop ring 400 is supported on the annular seat 300, the external side of the water stop ring 400 is contacted with the internal side of the protruding wall 310, the water stop ring 400 is supported on the annular seat 300 to surround and fit to the central base 220, so that the flowing area of the flowing clearance is adjustable by the water pressure so as to save water. Preferred, the central base 220 is arranged annularly with a plurality of protrusions 221 with spaces therebetween corresponding to the water stop ring. When in low pressure state, the elastic water stop ring suffers low action force, it deforms less, at this time, the flowing area of the water stop ring and the protrusions 221 of the central base 220 of the diversion device is larger, the flow volume can be controlled in a certain value, when in high pressure state, the elastic water stop suffers more and deforms greatly, at this time, the water stop ring and the protrusions of the central base 220 of the diversion device are fitting to each other to make the flowing area decrease when the pressure increases, the flow volume can be controlled in a certain value; so that the aerator has volume adjusting function, it can keep the volume constant in a certain pressure range.

The filter 500 is assembled to the protruding wall 310.

In this embodiment, the diversion device and the annular seat are separately manufactured, then fixedly assembled together, they can also be integrated manufactured, if they are separately manufactured, when to develop aerators with different volumes, it can just change the diversion device. The structure has advantages: it can configure diversion holes with different size according to different volume to achieve best draining effect. Water impacts the conical surface of the fixing ring after flowing out of the diversion holes of the diversion device, water is rectified and then flows out of the outlet mesh of the housing, it has advantages of stable outlet volume, water saving and softer water type.

The invention may be summarized as follows: The present invention is provided with a flow regulator, which comprises a housing portion, a diversion device, an annular seat and an elastic water stop ring, the annular seat, the diversion device and the housing portion are fixedly assembled together. The diversion device comprises a periphery wall, a central base in the periphery wall and a deflecting annular wall fixedly connecting the periphery wall and the central base, the periphery wall is disposed with diversion holes, the external periphery surface of the deflecting annular wall is gradually larger downwardly radially from the central base to the periphery wall, the central base has at least a part extending out of the internal hole of the annular seat, a flowing clearance is formed between the central base and the hole wall of the internal hole of the annular seat, the flowing clearance is disposed above the deflecting annular wall so that water flows out of the flowing clearance and then directly impacts the deflecting annular wall, it can reduce the pressure loss when water flows from the flowing clearance to the diversion holes, even in low pressure, it can achieve high flow volume and reduce impacting noise. The water stop ring is supported on the annular seat and surrounding and fitting to the central base, when water pressure acts on the elastic water stop element, the elastic water stop element deforms inwardly radially, it has well water saving effect and high stable flow volume.

Although the present invention has been described with reference to the preferred embodiments thereof for carrying out the patent for invention, it is apparent to those skilled in the art that a variety of modifications and changes may be made without departing from the scope of the patent for invention which is intended to be defined by the appended claims.

## Claims

1. A flow regulator, comprising a housing portion (100) and a diversion device (200) disposed in the housing portion (100), the diversion device (200) is used to divide the water flowing, the divided water flowing and the air sucked in are mixed to generate bubble water, wherein an annular seat (300) and an elastic water stop ring (400) are further provided, the annular seat (300), the diversion device (200) and the housing portion (100) are fixedly connected together;
the diversion device (200) comprises a periphery wall (210), a central base (220) in the periphery wall (210) and a deflecting annular wall (230) fixedly connecting the periphery wall (210) and the central base (220), the periphery wall (210) is disposed with diversion holes (211), the external periphery surface of the deflecting annular wall (230) is gradually larger downwardly radially from the central base (220) to the periphery wall (210), the central base (220) has at least a part extending out of the internal hole of the annular seat (300), a flowing clearance is formed between the central base (220) and the hole wall of the internal hole of the annular seat, the flowing clearance is disposed above the deflecting annular wall (230) to make water directly flow to the deflecting annular wall (230) through the flowing clearance;
the water stop ring (400) is supported on the annular seat (300) to surround and fit to the central base (220), so that the flowing area of the flowing clearance is adjustable by the water pressure so as to save water.

2. The flow regulator according to claim 1, wherein the annular seat (300) is fixedly connected to the periphery wall (210); a protruding wall (310) is protruded on the annular seat (300) to surround the internal hole of the annular seat (300), the external side of the water stop ring is contacted with the internal side of the protruding wall (310).

3. The flow regulator according to claim 2, wherein a filter (500) is further provided, the filter (500) is assembled to the protruding wall (310).

4. The flow regulator according to any one or more of claims 1 to 3, in particular according to claim 2, wherein the upper periphery of the periphery wall (210) protrudes outwardly with a support plate (212), the external periphery of the support plate (212) protrudes upwardly to form a connecting wall (213), the annular seat (300) is supported on the support plate (212), the annular seat (300) is fixedly connected the diversion device (200) by the cooperation of the connecting wall (213) and the annular seat (300).

5. The flow regulator according to any one or more of claims 1 to 4, wherein the central base (220) is arranged annularly with a plurality of protrusions (221) with spaces therebetween corresponding to the water stop ring.

6. The flow regulator according to any one or more of claims 1 to 5, wherein the housing portion (100) is disposed with a mutation chamber (110) and a suction passage (120) connecting the inner and the outer of the mutation chamber (110), the diversion device (200) is located on the mutation chamber (110), the divided water enters the mutation chamber (110) and negative pressure generates.

7. The flow regulator according to any one or more of claims 1 to 6, wherein the housing portion (100) comprises a housing (130) and a fixed ring (140), the housing (130) comprises an external wall (131), the external wall (131) is disposed with a suction passage (120) running through the inner and the outer, the fixed ring (140) is fixedly connected to the upper portion of the external wall (131), the diversion device (200) is fixedly connected to the fixed ring (140).

8. The flow regulator according to claim 7, wherein the fixed ring (140) is disposed with a conical surface (141) corresponding to the diversion holes (211), the conical surface (141) surrounds the diversion device (200), so that water flows out of the diversion holes (211) and impacts the conical surface.

9. The flow regulator according to any one or more of claims 1 to 8, wherein the external revolution surface of the deflecting annular wall (230) comprises a part of the conical surface.

10. The flow regulator according to any one or more of claims 1 to 8, wherein the external revolution surface of the deflecting annular wall (230) comprises a smooth curve.

11. The flow regulator according to any one or more of claims 1 to 8, wherein the external revolution surface of the deflecting annular wall (230) comprises an arc with the center of circle outward.

## Patentansprüche

1. Durchflussregler, der einen Gehäuseabschnitt (100) und eine Umleitungsvorrichtung (200), die in dem Gehäuseabschnitt (100) angeordnet ist, aufweist, wobei die Umleitungsvorrichtung (200) verwendet wird, um den Wasserfluss teilen, wobei der geteilte Wasserfluss und die angesaugte Luft vermischt werden, um sprudelndes Wasser zu erzeugen, wobei ferner ein ringförmiges Auflager (300) und ein elastischer Wasserstoppring (400) bereitgestellt sind, wobei das ringförmige Auflager (300), die Umleitungsvorrichtung (200) und der Gehäuseabschnitt (100) fest miteinander verbunden sind;
wobei die Umleitvorrichtung (200) eine Umfangswand (210), einen zentralen Sockel (220) in der Umfangswand (210) und eine ringförmige Ablenkwand (230), welche die Umfangswand (210) und den zentralen Sockel (220) fest verbindet, aufweist, wobei die Umfangswand (210) mit Umleitlöchern (211) versehen ist, die Außenumfangsoberfläche der ringförmigen Ablenkwand (230) von dem zentralen Sockel (220) zu der Umfangswand (210) nach unten radial allmählich größer wird, wobei der zentrale Sockel (220) wenigstens einen Teil hat, der sich aus dem Innenloch des ringförmigen Auflagers (300) erstreckt, wobei ein Fließspielraum zwischen dem zentralen Sockel (220) und der Lochwand des Innenlochs des ringförmigen Auflagers ausgebildet wird, wobei der Fließspielraum oberhalb der ringförmigen Ablenkwand (230) angeordnet ist, um Wasser direkt durch den Fließspielraum zu der ringförmigen Ablenkwand (230) strömen zu lassen;
wobei der Wasserstoppring (400) auf dem ringförmigen Auflager (300) gehalten wird, um den zentralen Sockel (220) zu umgeben und zu installieren, so dass die Flussfläche des Fließspielraums durch den Wasserdruck einstellbar ist, um Wasser zu sparen.

2. Durchflussregler nach Anspruch 1, wobei das ringförmige Auflager (300) fest mit der Umfangswand (210) verbunden ist; eine vorstehende Wand (310) auf dem ringförmigen Auflager (300) vorsteht, um das Innenloch des ringförmigen Auflagers (300) zu umgeben, wobei die Außenseite des Wasserstopprings mit der Innenseite der vorstehenden Wand (310) in Kontakt ist.

3. Durchflussregler nach Anspruch 2, wobei ferner ein Filter (500) bereitgestellt ist, wobei das Filter (500) an der vorstehenden Wand (310) montiert ist.

4. Durchflussregler nach Anspruch einem oder mehreren der Ansprüche 1 bis 3, insbesondere nach Anspruch 2, wobei der obere Umfang der Umfangswand (210) mit einer Halteplatte (212) nach außen vorsteht, wobei der Außenumfang der Halteplatte (212) nach oben vorsteht, um eine Verbindungswand (213) zu bilden, wobei das ringförmige Auflager (300) auf der Halteplatte (212) gehalten wird, wobei das ringförmige Auflager (300) durch Zusammenwirken der Verbindungswand (213) und des ringförmigen Auflagers (300) fest mit der Umleitungsvorrichtung (200) verbunden ist.

5. Durchflussregler nach einem oder mehreren der Ansprüche 1 bis 4, wobei der zentrale Sockel (220) mit mehreren Vorsprüngen (221) mit Zwischenräumen, die dem Wasserstoppring entsprechen, dazwischen ringförmig angeordnet ist.

6. Durchflussregler nach einem oder mehreren der Ansprüche 1 bis 5, wobei der Gehäuseabschnitt (100) mit einer Änderungskammer (110) und einem Ansaugdurchgang (120), der das Innere und das Äußere der Änderungskammer (110) verbindet, eingerichtet ist, wobei die Umleitungsvorrichtung (200) auf der Änderungskammer (110) angeordnet ist, das geteilte Wasser in die Änderungskammer (110) eintritt und ein Unterdruck erzeugt wird.

7. Durchflussregler nach einem oder mehreren der Ansprüche 1 bis 6, wobei der Gehäuseabschnitt (100) ein Gehäuse (130) und einen festen Ring (140) aufweist, wobei das Gehäuse (130) eine Außenwand (131) aufweist, wobei die Außenwand (131) mit einem Ansaugdurchgang (120) eingerichtet ist, der durch das Innere und das Äußere verläuft, wobei der feste Ring (140) fest mit dem oberen Abschnitt der Außenwand (131) verbunden ist, wobei die Umleitungsvorrichtung (200) fest mit dem festen Ring (140) verbunden ist.

8. Durchflussregler nach Anspruch 7, wobei der feste Ring (140) mit einer konischen Oberfläche (141) eingerichtet ist, die den Ablenklöchern (211) entspricht, wobei die konische Oberfläche (141) die Umleitungsvorrichtung (200) umgibt, so dass Wasser aus den Ablenklöchern (211) fließt und auf die konische Oberfläche auftrifft,

9. Durchflussregler nach einem oder mehreren der Ansprüche 1 bis 8, wobei die äußere Umlaufoberfläche der ringförmigen Ablenkwand (230) einen Teil der konischen Oberfläche aufweist.

10. Durchflussregler nach einem oder mehreren der Ansprüche 1 bis 8, wobei die äußere Umlaufoberfläche der ringförmigen Ablenkwand (230) eine glatte Krümmung aufweist.

11. Durchflussregler nach einem oder mehreren der Ansprüche 1 bis 8, wobei die äußere Umlaufoberfläche der ringförmigen Ablenkwand (230) einen Bogen aufweist, dessen Kreismittelpunkt außen ist.

## Revendications

1. Régulateur de débit comprenant une partie formant boîtier (100) et un dispositif de déviation (200) disposé dans la partie formant boîtier (100), le dispositif de déviation (200) est utilisé pour diviser l'écoulement d'eau, l'écoulement d'eau divisé et l'air aspiré sont mélangés pour produire de l'eau avec des bulles, un siège annulaire (300) et une bague élastique d'arrêt d'eau (300) étant également prévus, le siège annulaire (300), le dispositif de déviation (200) et la partie formant boîtier (100) étant reliés de manière fixe entre eux ;
le dispositif de déviation (200) comprenant une paroi périphérique (210), une base centrale (220) dans la paroi périphérique (210), et une paroi annulaire déflectrice (230) qui relie de manière fixe la paroi périphérique (210) et la base centrale (220), la paroi périphérique (210) étant pourvue de perçages de déviation (211), la surface périphérique externe de la paroi annulaire déflectrice (230) augmentant progressivement vers le bas, radialement à partir de la base centrale (220) vers la paroi périphérique (210), la base centrale (220) ayant au moins une partie qui sort du perçage interne du siège annulaire (300), un espace d'écoulement étant formé entre la base centrale (220) et la paroi du perçage interne du siège annulaire, l'espace d'écoulement étant disposé au-dessus de la paroi annulaire déflectrice (230) pour amener l'eau à s'écouler directement jusqu'à la paroi annulaire déflectrice (230) à travers ledit espace d'écoulement ;
la bague d'arrêt d'eau (400) étant supportée sur le siège annulaire (300) pour entourer la base centrale (220) et être adaptée à celle-ci, de sorte que la superficie d'écoulement de l'espace d'écoulement est apte à être réglée par la pression d'eau, de manière à économiser de l'eau.

2. Régulateur de débit selon la revendication 1, dans lequel le siège annulaire (300) est relié de manière fixe à la paroi périphérique (210) ; une paroi saillante (310) fait saillie sur le siège annulaire (300) pour entourer le perçage interne de celui-ci, le côté externe de la bague d'arrêt d'eau est en contact avec le côté interne de la paroi saillante (310).

3. Régulateur de débit selon la revendication 2, dans lequel un filtre (500) est également prévu, et le filtre (500) est assemblé avec la paroi saillante (310).

4. Régulateur de débit selon l'une au moins des revendications 1 à 3, en particulier selon la revendication 2, dans lequel la périphérie supérieure de la paroi périphérique (210) dépasse vers l'extérieur avec une plaque de support (212), la périphérie externe de la plaque de support (212) dépasse vers l'extérieur pour former une paroi de liaison (213), le siège annulaire (300) est supporté sur la plaque de support (212), le siège annulaire (300) est relié de manière fixe au dispositif de déviation (200) grâce à la coopération de la paroi de liaison (213) et du siège annulaire (300).

5. Régulateur de débit selon l'une au moins des revendications 1 à 4, dans lequel la base centrale (220) est disposée suivant une forme annulaire, avec plusieurs saillies (221) et des espaces entre celles-ci qui correspondent à la bague d'arrêt d'eau.

6. Régulateur de débit selon l'une au moins des revendications 1 à 5, dans lequel la partie formant boîtier (100) est pourvue d'une chambre de mutation (110) et d'un passage d'aspiration (120) qui relie l'intérieur et l'extérieur de ladite chambre de mutation (110), le dispositif de déviation (220) se trouve sur la chambre de mutation (110), l'eau divisée entre dans la chambre de mutation (110) et une pression négative est produite.

7. Régulateur de débit selon l'une au moins des revendications 1 à 6, dans lequel la partie formant boîtier (100) comprend un boîtier (130) et une bague fixe (140), le boîtier (130) comprend une paroi externe (131), la paroi (131) est pourvue d'un passage d'aspiration (120) qui traverse l'intérieur et l'extérieur, la bague fixe (140) est reliée de manière fixe à la partie supérieure de la paroi externe (131), le dispositif de déviation (200) est relié de manière fixe à la bague fixe (140).

8. Régulateur de débit selon la revendication 7, dans lequel la bague fixe (140) est pourvue d'une surface conique (141) qui correspond aux perçages de déviation (211), la surface conique (141) entoure le dispositif de déviation (200) de sorte que l'eau sort par les perçages de déviation (211) et arrive sur la surface conique.

9. Régulateur de débit selon l'une au moins des revendications 1 à 8, dans lequel la surface de révolution externe de la paroi annulaire de déviation (230) comprend une partie de la surface conique.

10. Régulateur de débit selon l'une au moins des revendications 1 à 8, dans lequel la surface de révolution externe de la paroi annulaire déflectrice (230) comprend une courbe continue.

11. Régulateur de débit selon l'une au moins des revendications 1 à 8, dans lequel la surface de révolution externe de la paroi annulaire déflectrice (230) comprend un arc dont le centre du cercle est dirigé vers l'extérieur.
